# FASCICULE DE BREVET EUROPEEN

(11) **EP 2 188 943 B1**
(45) Date de publication et mention de la délivrance du brevet: **23.08.2017**
(21) Numéro de dépôt: 08803749.4
(22) Date de dépôt: 05.09.2008
(51) Int. Cl.: H04L 9/32, G01S 1/00, H04N 1/32

(54) **PROCÉDÉ FOURNISSANT LES MOYENS DE RECONNAITRE L'ORIGINE ET/OU LE CONTENU D'UN SIGNAL RF**
VERFAHREN ZUR BEREITSTELLUNG DER MITTEL ZUR ERKENNUNG DES URSPRUNGS UND/ODER INHALTS EINES HF-SIGNALS
METHOD PROVIDING THE MEANS FOR RECOGNIZING THE ORIGIN AND/OR CONTENT OF AN RF SIGNAL

(30) Priorité: 21.09.2007 FR 0706643
(43) Date de publication de la demande: 26.05.2010
(73) Titulaire: THALES, 92400 Courbevoie (FR)
(72) Inventeur: DAMIDAUX, Jean-Louis, F-31650 Auzielle (FR)
(74) Mandataire: Esselin, Sophie
(86) Numéro de dépôt international: PCT/EP2008/061780
(87) Numéro de publication internationale: WO 2009/037133

(56) Documents cités:
- EP-A- 1 594 122
- WO-A-2004/002160
- US-A1- 2002 191 809
- US-B1- 7 020 555
- US-B1- 7 194 620
- INGEMAR J COX ET AL: "Secure Spread Spectrum Watermarking for Multimedia" IEEE TRANSACTIONS ON IMAGE PROCESSING, IEEE SERVICE CENTER, PISCATAWAY, NJ, US, vol. 6, no. 12, 1 décembre 1997 (1997-12-01), XP011026243 ISSN: 1057-7149

## Description

La présente invention se rapporte à un procédé fournissant les moyens permettant de reconnaître l'origine et/ou le contenu d'un signal RF.

On connaît de nombreuses techniques pour combattre le brouillage de signaux tels que ceux des radars. Par contre, dans un domaine tel que celui de la réception de signaux de radio-localisation, il faut disposer des mesures (dites pseudo-mesures) fournies par des satellites et de données d'éphéméride. Il est relativement facile de protéger les données d'éphéméride pour en garantir l'origine et/ou le contenu. Par contre, les caractéristiques des signaux de mesure sont dans le domaine public, et ne peuvent donc être protégés. Il est alors facile d'émuler ces signaux afin qu'un utilisateur obtienne des coordonnées de position géographique fausses. Il en est de même dans d'autres domaines de transmissions numériques tels que les télécommunications ou les diffusions de programmes de télévision.

Peu de recherches ont été menées pour permettre de garantir l'origine de tels signaux RF. En effet, il est maintenant possible, si l'on met en oeuvre des calculateurs suffisamment puissants, de produire de façon malintentionnée des signaux imitant ceux émis par les satellites de géo-localisation. Ces techniques de leurrage sont dénommées en anglais « spoofing ».

Quelques indications pour essayer d'authentifier les signaux reçus ont été décrites par exemple dans un article de Logan SCOTT « Anti-Spoofing and Authenticated Signal Architectures for Civil Navigation systems » paru dans la revue ION GPS/GNSS 2003, 9-12 Septembre 2003, Portland, OR. Toutefois, la détermination de l'origine et/ou du contenu des signaux reçus nécessite également d'importants moyens de calcul consommant une énergie non négligeable et n'est donc pas à la portée d'un simple utilisateur d'un récepteur de radio-navigation ou d'un utilisateur ordinaire abonné à des programmes de télévision numérique. Il est connu de l'état de l'art les techniques suivantes.

Le document WO2004002160 décrit un procédé d'authentification d'un signal audiovisuel. Une signature est dérivée de toutes les plages d'affichage, y compris les espaces qui comportent un contenu plat ou non filigrané. En combinant des bits de signature associés à toutes les régions du signal audiovisuel et en les étalant sur l'ensemble du signal audiovisuel ou au moins sur la majeure partie de celui-ci, de préférence en appliquant une technique de filgranage par étalement de spectre on peut vérifier l'authenticité des plages plates.

Le document EP1594122 décrit une méthode d'insertion de Filigrane à spectre étalé qui peut être utiliséee pour le watermarking de signaux audio. Le signal portant le watermark peut être modulé par une fonction de répartition ou une fonction aléatoire. Au niveau du décoder, le watermark qui est inséré dans le signal audio est extrait par convolution.

Le document XP011026243 décrit un algorithme pour faire un watermark d'image mais aussi audio, videao et multimedia, ledit algorithme étant sécurisé et "tamper résistant". La construction du watermark étant une construction indépendant et identiquement distribué (i.i.d.) d'un vecteur aléatoire Gaussian qui est inséré de façon imperceptible répartie sur la partie la plus pertinente du spectre.

Le document US7194620 décrit une méthode d'authentification en temps réel comprenant l'étape d'insertion d'une signature dans les données.

Le document US7020555 décrit un système de souscription pour un service GPS.

Le document US2002191809 décrit un système de watermark asymétrique réparti sur le spectre. La présente invention a pour objet un procédé fournissant les moyens permettant de reconnaître l'origine et/ou le contenu d'un signal RF sans nécessiter d'importants moyens de calcul, ces moyens de reconnaissance n'étant accessibles qu'à des personnes autorisées et étant pratiquement non modifiables et très difficilement détectables par des personnes non autorisées, et ce, dans diverses applications mettant en oeuvre des signaux RF transmettant des informations au moins en partie cachées.

Le procédé conforme à l'invention est caractérisé en ce qu'on étale une information à cacher à l'aide d'un code caché, qu'on répartit cette information, à l'aide d'une fonction XOR (OU Exclusif), dans des codes connus à l'aide d'un algorithme de répartition caché, qu'à la réception on met en oeuvre l'algorithme inverse de celui ayant servi à la répartition pour accéder au code étalé, qu'on corrèle ce code étalé avec le code caché pour retrouver l'information cachée. De façon avantageuse, le code caché est décalé au moment de l'émission, afin qu'à la réception, lors de la corrélation de ce code étalé avec le code caché non décalé, le décalage soit détecté. La valeur de ce décalage peut permettre de transmettre de l'information.

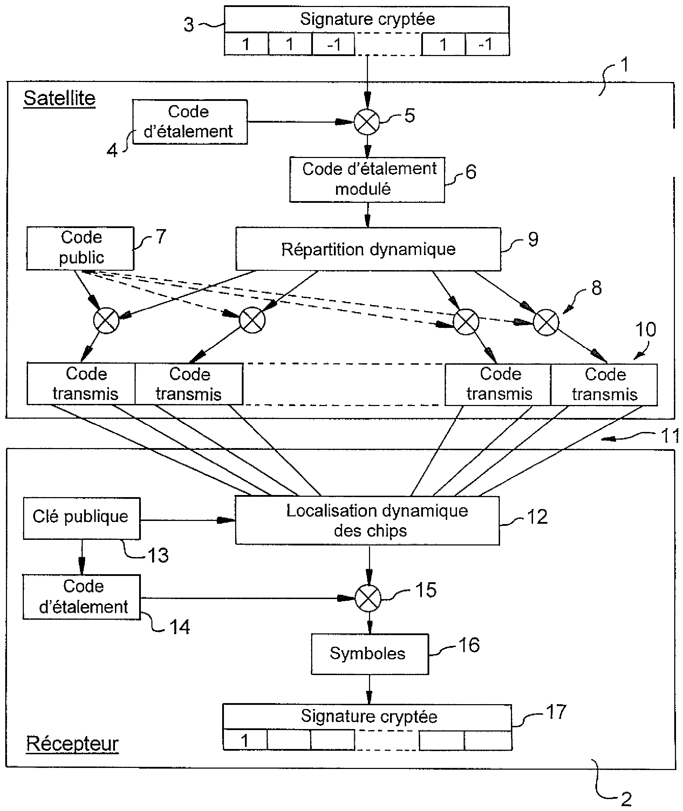

La présente invention sera mieux comprise à la lecture de la description détaillée d'un mode de réalisation, pris à titre d'exemple non limitatif et illustré par le dessin annexé, sur lequel :
- la figure unique est un bloc-diagramme simplifié d'un dispositif de mise en oeuvre du procédé de l'invention.

L'invention est décrite ci-dessous en référence à la vérification de l'origine et/ou du contenu de signaux de radio-localisation (GNSS), mais il est bien entendu qu'elle n'est pas limitée à cette seule application, et qu'elle peut être mise en oeuvre pour différents signaux RF, tels que d'autres types de signaux de localisation (terrestres par exemple) ou des signaux de télévision numérique terrestre (TNT), en particulier de télévision payante, ou encore des signaux de téléphonie payante.

Une caractéristique essentielle du procédé de l'invention est de cacher dans la séquence d'étalement une signature numérique que l'on peut qualifier de filigrane (« watermark » en anglais). Ce filigrane est caché de façon qu'on ne puisse pas le détecter directement ou à l'aide de méthodes statistiques dans la séquence d'étalement. Bien entendu, un utilisateur autorisé peut facilement extraire ce filigrane de la séquence d'étalement et s'en servir pour déterminer la source du signal reçu.

Sur le bloc-diagramme de la figure unique du dessin, montrant un satellite 1 et un des récepteurs correspondants 2, on n'a représenté que les éléments relatifs à l'invention.

Les circuits appropriés du satellite 1 reçoivent une information 3 de signature cachée qui peut être stockée à bord ou transmise depuis le sol. Cette signature est une information cachée connue uniquement de l'organisme contrôlant le satellite et des utilisateurs habilités à la connaître (par exemple les abonnés à un service payant transmis par le satellite 1). La signature 3 comporte une longue séquence, de préférence d'une centaine de bits au moins, qui permet de reconnaître l'origine et/ou le contenu de signaux de radio-localisation et est avantageusement modifiable dynamiquement depuis le sol à l'aide de messages cryptés en envoyant soit une nouvelle séquence, soit une nouvelle graine pour générer une nouvelle séquence, soit un ordre de changement de signature parmi celles stockées à bord. Un code caché d'étalement (filigrane) 4 est « modulé » (5) par cette signature (3). Cette modulation consiste à étaler le filigrane tout au long de la séquence de la signature 3. On obtient ainsi un filigrane modulé 6. Ce code 4 d'étalement est un code privé qui peut lui aussi être modifié dynamiquement depuis le sol comme décrit ci-dessus pour la signature 3.

On modifie ensuite (de façon difficilement détectable, comme précisé ci-dessous) une partie d'un code public 7, qui est ici un code d'étalement de navigation classique, à l'aide d'une technique faisant appel au filigrane modulé 6 et à une fonction « OU Exclusif » 8 (également dénommée « XOR »). Cette modification consiste à inverser dynamiquement certains des éléments (« chips » en anglais) du code 7, c'est-à-dire que cette modification est effectuée au fur et à mesure du déroulement du code 6, le code 7 étant présenté aux différentes cellules de la fonction 8 à chaque séquence du filigrane modulé 6, l'emplacement de ces éléments au sein du code public étant déterminé par un algorithme 9 qui utilise des clés privées. Ces éléments sont choisis par l'algorithme de façon pseudo-aléatoire et constituent une faible partie du code public 7, avantageusement quelques pour-cents de ce code, afin de rendre très difficile la détection des modifications de ce code 7 et de dégrader d'une façon minimale la corrélation du code public 7. Le code modulé 6 ayant une longueur supérieure à celle du code 7 et ne modifiant qu'une faible partie de celui-ci, la fonction XOR 8 emploie plusieurs cellules réalisant chacune en temps réel l'opération XOR sur le code 7 qui est présenté à chacune d'elles.

Le code de navigation ainsi caché est diffusé (11) par l'émetteur (non représenté) du satellite 1. Il est traité selon des opérations inverses de celles qui ont été pratiquées à l'émission dans un récepteur de radio-navigation 2, de la façon suivante. Les circuits de réception (non représentés) du récepteur 2 transmettent les signaux reçus du satellite 1 à une entité 12 qui sélectionne dynamiquement à l'aide de la clé publique 13 l'emplacement des chips où l'opération 8 de « OU exclusif» (XOR) a été réalisée.

D'autre part, la clé 13 permet de générer le code caché 14 d'étalement de filigrane (identique au code 4). Ce code 14 est envoyé à un corrélateur 15 qui reçoit de l'entité 12 des séquences de codes dans lesquelles les chips du code 7 modifiés à l'émission ont été rétablis à leurs valeurs d'origine. A la sortie du corrélateur 15, si le code d'étalement 14 est effectivement présent dans le signal reçu, on obtient les symboles (16) qui doivent permettre de reconstituer la signature 17 après décodage, qui doit être identique à la signature 3 si les informations reçues du satellite 1 sont bien celles émises par l'organisme contrôlant le satellite, et non pas un leurre.

En conclusion, la mise en oeuvre du procédé de l'invention est « transparente » pour l'utilisateur qui n'a pas besoin des services (en général payants) protégés par ce procédé. Le marquage effectué par ce procédé est très difficilement détectable du fait que le code transmis (10) ainsi modifié n'est quasiment pas altéré et que le code public d'étalement de navigation (7) n'est pas modifié.

En outre, même si des personnes malintentionnées mettaient en oeuvre des moyens très importants pour simuler ce marquage, elles seraient obligées d'utiliser une antenne à très grand gain pour détecter les chips modifiés, car sans elle, il est impossible de moduler les signaux de navigation avec les chips modifiés. Il ne serait possible que de différer l'émission des leurres pour avoir le temps d'extraire chaque chip et de l'analyser, mais alors, la vérification de la cohérence Doppler de ces signaux peut être facilement effectuée. Un utilisateur averti peut vérifier la cohérence des signaux reçus (en Doppler et distance, et les valeurs d'éphéméride). Du fait que la valeur des chips modifiés dépend également des données émises, même s'il est possible à des personnes malintentionnées de détecter des chips modifiés, il leur est impossible d'introduire des leurres car ils ne peuvent pas déterminer à quels emplacements ils doivent modifier les chips car s'ils veulent transmettre la valeur opposée à la valeur transmise par le système réel, ils ne connaissent que l'emplacement des chips à ne pas modifier.

## Revendications

1. Procédé permettant de reconnaître l'origine et/ou le contenu d'un signal RF, comprenant les étapes suivantes :
- étaler une signature digitale (3) dans un code caché (4), un décalage de temps étant appliqué sur ledit code caché, pour obtenir un code caché modulé (6),
- répartir le code caché modulé (6) dans un code public d'étalement de navigation (7) en appliquant un algorithme de clé privée (9) avec une fonction « OU exclusif » (8), pour obtenir des séquences de codes modulés (10);
- transmettre (11) les séquences de codes modulés (10) ;
- à réception, appliquer un algorithme de clé publique (13) pour sélectionner des séquences de codes modulés (12) et pour générer un code caché d'étalement (14) ; et
- corréler les séquences de code sélectionnées (12) avec le code d'étalement (14) pour retrouver la signature digitale cachée (17).

2. Procédé selon la revendication 1, **caractérisé en ce que** le décalage est détecté lors de la corrélation du code d'étalement avec les séquences de code sélectionnées.

3. Procédé selon la revendication 1 ou 2, **caractérisé en ce que** le décalage est utilisé pour transmettre de l'information.

4. Procédé selon l'une des revendications précédentes, **caractérisé en ce que** le signal RF est un signal de radio-localisation d'une constellation de satellites.

5. Procédé selon la revendication 4, **caractérisé en ce que** la signature digitale à cacher (3) est stocké à bord des satellites.

6. Procédé selon la revendication 4, **caractérisé en ce que** la signature digitale à cacher est transmise depuis le sol aux satellites.

7. Procédé selon l'une des revendications précédentes, **caractérisé en ce que** la signature digitale à cacher est modifiée dynamiquement depuis le sol à l'aide de messages cryptés.

8. Procédé selon la revendication 7, **caractérisé en ce que** la signature digitale à cacher est modifiée par l'envoi d'une nouvelle séquence.

9. Procédé selon la revendication 7, **caractérisé en ce que** la signature digitale à cacher est modifiée par l'envoi d'une nouvelle graine pour générer une nouvelle séquence.

10. Procédé selon la revendication 5, **caractérisé en ce que** l'on stocke à bord plusieurs signatures digitales à cacher et qu'on envoie un ordre de changement pour sélectionner l'une de celles stockées à bord.

11. Procédé selon l'une des revendications 4 à 10, **caractérisé en ce que** le code caché d'étalement (14) est modifié dynamiquement depuis le sol à l'aide de messages cryptés.

12. Procédé selon la revendication 11, **caractérisé en ce que** le code caché, qui est une longue séquence de bits, est modifié par l'envoi d'une nouvelle séquence.

13. Procédé selon la revendication 11, **caractérisé en ce que** le code caché est modifié par l'envoi d'une nouvelle graine pour générer une nouvelle séquence.

14. Procédé selon la revendication 11, **caractérisé en ce que** l'on stocke à bord plusieurs codes cachés et qu'on envoie un ordre de changement pour sélectionner l'un de ceux stockés à bord.

## Patentansprüche

1. Verfahren, zum Erkennen des Ursprungs und/oder des Inhalts eines HF-Signals, das die folgenden Schritte umfasst:
- Spreizen einer digitalen Signatur (3) in einem verborgenen Code (4), wobei eine Zeitverschiebung auf den verborgenen Code angewendet wird, um einen modulierten verborgenen Code (6) zu erhalten,
- Verteilen des modulierten verborgenen Codes (6) in einem öffentlichen Navigationsspreizcode (7) unter Anwendung eines Algorithmus mit privatem Schlüssel (9) mit einer "Exklusiv-ODER"-Funktion (8), um modulierte Codesequenzen (10) zu erhalten;
- Übertragen (11) der modulierten Codesequenzen (10);
- bei Empfang Anwenden eines Algorithmus mit privatem Schlüssel (13), um modulierte Codesequenzen (12) auszuwählen und einen verborgenen Spreizcode (14) zu generieren; und
- Korrelieren der ausgewählten Codesequenzen (12) mit dem Spreizcode (14), um die verborgene digitale Signatur (17) wiederzuerlangen.

2. Verfahren nach Anspruch 1, **dadurch gekennzeichnet, dass** die Verschiebung während der Korrelation des Spreizcodes mit den ausgewählten Codesequenzen erkannt wird.

3. Verfahren nach Anspruch 1 oder 2, **dadurch gekennzeichnet, dass** die Verschiebung zum Übertragen der Information verwendet wird.

4. Verfahren nach einem der vorhergehenden Ansprüche, **dadurch gekennzeichnet, dass** das HF-Signal ein Funkortungssignal einer Satellitenkonstellation ist.

5. Verfahren nach Anspruch 4, **dadurch gekennzeichnet, dass** die zu verbergende digitale Signatur (3) an Bord der Satelliten gespeichert wird.

6. Verfahren nach Anspruch 4, **dadurch gekennzeichnet, dass** die zu verbergende digitale Signatur vom Boden zu den Satelliten übertragen wird.

7. Verfahren nach einem der vorhergehenden Ansprüche, **dadurch gekennzeichnet, dass** die zu verbergende digitale Signatur vom Boden aus mithilfe verschlüsselter Nachrichten dynamisch modifiziert wird.

8. Verfahren nach Anspruch 7, **dadurch gekennzeichnet, dass** die zu verbergende digitale Signatur durch Senden einer neuen Sequenz modifiziert wird.

9. Verfahren nach Anspruch 7, **dadurch gekennzeichnet, dass** die zu verbergende digitale Signatur durch Senden eines neuen Elements modifiziert wird, um eine neue Sequenz zu generieren.

10. Verfahren nach Anspruch 5, **dadurch gekennzeichnet, dass** an Bord mehrere zu verbergende digitale Signaturen gespeichert werden und ein Änderungsbefehl gesendet wird, um eine von denen auszuwählen, die an Bord gespeichert sind.

11. Verfahren nach einem der Ansprüche 4 bis 10, **dadurch gekennzeichnet, dass** der verborgene Spreizcode (14) vom Boden aus mithilfe verschlüsselter Nachrichten dynamisch modifiziert wird.

12. Verfahren nach Anspruch 11, **dadurch gekennzeichnet, dass** der verborgene Code, der eine lange Bitsequenz ist, durch das Senden einer neuen Sequenz modifiziert wird.

13. Verfahren nach Anspruch 11, **dadurch gekennzeichnet, dass** der verborgene Code durch das Senden eines neuen Elements modifiziert wird, um eine neue Sequenz zu generieren.

14. Verfahren nach Anspruch 11, **dadurch gekennzeichnet, dass** an Bord mehrere verborgene Codes gespeichert werden und ein Änderungsbefehl gesendet wird, um einen von den an Bord gespeicherten auszuwählen.

## Claims

1. Method for recognising the origin and/or the content of an RF signal comprising the following steps:
- spreading a digital signature (3) in a hidden code (4), a time offset being applied to the hidden code in order to obtain a modulated hidden code (6),
- distributing the modulated hidden code (6) in a navigation spread public code (7) by applying a private key algorithm (9) with an "Exclusive OR" function (8) in order to obtain sequences of modulated codes (10);
- transmitting (11) the sequences of modulated codes (10);
- upon reception, applying a public key algorithm (13) in order to select sequences of modulated codes (12) and in order to generate a hidden spread code (14); and
- correlating the sequences of modulated codes (12) with the spread code (14) in order to locate the hidden digital signature (17).

2. Method according to claim 1, **characterised in that** the offset is detected during the correlation of the spread code with the selected code sequences.

3. Method according to claim 1 or 2, **characterised in that** the offset is used to transmit information.

4. Method according to any one of the preceding claims, **characterised in that** the RF signal is a radio-location signal for a constellation of satellites.

5. Method according to claim 4, **characterised in that** the digital signature (3) which is intended to be hidden is stored on-board satellites.

6. Method according to claim 4, **characterised in that** the digital signature which is intended to be hidden is transmitted from the ground to the satellites.

7. Method according to any one of the preceding claims, **characterised in that** the digital signature which is intended to be hidden is modified dynamically from the ground by means of encrypted messages.

8. Method according to claim 7, **characterised in that** the digital signature which is intended to be hidden is modified by transmitting a new sequence.

9. Method according to claim 7, **characterised in that** the digital signature which is intended to be hidden is modified by transmitting a new seed in order to generate a new sequence.

10. Method according to claim 5, **characterised in that** there are stored on-board a plurality of digital signatures which are intended to be hidden and **in that** a change order is transmitted in order to select one of those stored on-board.

11. Method according to any one of claims 4 to 10, **characterised in that** the hidden spread code (14) is modified dynamically from the ground by means of encrypted messages.

12. Method according to claim 11, **characterised in that** the hidden code which is a long sequence of bits is modified by transmitting a new sequence.

13. Method according to claim 11, **characterised in that** the hidden code is modified by transmitting a new seed in order to generate a new sequence.

14. Method according to claim 11, **characterised in that** a plurality of hidden codes are stored on-board and a change order is transmitted in order to select one of those stored on-board.
